# DEMANDE DE BREVET EUROPEEN

(11) **EP 3 023 172 A1**
(43) Date de publication de la demande: **25.05.2016**
(21) Numéro de dépôt: 15192693.8
(22) Date de dépôt: 03.11.2015
(51) Int. Cl.: B21J 15/28, B25B 27/00

(54) **SYSTÈME ET PROCÉDÉ DE SERTISSAGE D'UN COMPOSANT DE FIXATION SUR UN SUPPORT**

(30) Priorité: 24.11.2014 FR 1461327
(71) Demandeur: Bollhoff Otalu S.A., 73490 La Ravoire (FR)
(72) Inventeur: Simonet, Frédéric, 73610 Attignat-Oncin (FR)
(74) Mandataire: Hecké, Gérard

(57) **Abrégé**

Système de sertissage (1) d'un composant de fixation (5) sur un support (6), comprenant :
- un outil de sertissage (2) comportant un logement (13) et une tige de traction (12) configurée pour coopérer avec le composant de fixation (5) de manière à le déformer lors d'une translation de la tige de traction (12),
- une source d'un fluide (3) raccordée au logement (13) pour fournir le fluide sous pression afin de déplacer la tige de traction (12),
- un moyen de mesure (30) pour mesurer les déplacements de la tige de traction (12), et
- un moyen de détection (31) pour fournir une information d'une mise en pression du fluide dans le logement (13), et une unité de commande (4) configurée pour enregistrer une courbe des déplacements mesurés et l'information de mise en pression du fluide dans le logement (13).

## Description

### Domaine technique de l'invention

L'invention concerne le sertissage d'un composant de fixation sur un support.

### État de la technique

Un composant de fixation à sertir est un élément d'assemblage pour fixer une autre pièce sur un support, telle une vis, un écrou ou une plaque. En particulier, le composant à sertir comporte une tête et un corps déformable pour former un bourrelet de sertissage de façon à fixer le composant sur le support, le bourrelet de sertissage étant destiné à coincer le support avec la tête du composant. Le composant peut être un écrou ou un rivet. Un écrou est une pièce creuse taraudée, c'est-à-dire qui comporte un filetage interne, destinée à être fixée à une autre pièce filetée. Un rivet est un élément d'assemblage de pièces plates. En général, les composants de fixation sont sertis sur les supports avant l'assemblage final.

Actuellement, on sertit les composants de fixation à l'aide d'un outil de sertissage qui peut être manoeuvré manuellement ou monté sur un robot. En particulier, certaines lignes d'assemblage de pièces ne peuvent pas être équipées d'un robot et il est alors nécessaire d'utiliser un outil de sertissage manoeuvré manuellement. Certaines lignes d'assemblage sont modulaires pour permettre une meilleure flexibilité pour des assemblages complexes et sont moins automatisées. Ce qui est le cas, par exemple, où l'opérateur doit suivre l'avancement de l'assemblage pour réaliser son opération de sertissage.

On peut citer la demande de brevet européen EP0995518 qui divulgue une riveteuse pour des rivets munis d'un mandrin, équipée d'un dispositif pour fournir de façon automatisée les rivets à une extrémité de la riveteuse, et d'un bac pour collecter les mandrins cassés après une opération de rivetage. En outre, la riveteuse comprend des moyens pour commander un cycle de rivetage. En particulier, la riveteuse comporte un piston hydraulique disposé dans un logement et raccordé à des mâchoires qui permettent la prise du mandrin d'un rivet, le piston étant apte à être déplacé en translation pour tracter le mandrin et déformer le rivet. La riveteuse comporte en outre une source hydraulique raccordée au logement par un passage hydraulique, un mécanisme de détection de la pression hydraulique dans le passage, et un contrôleur relié au mécanisme de détection et apte à interrompre la source hydraulique lorsque la pression hydraulique chute au-dessous d'un niveau prédéterminé indicateur d'une cassure du mandrin. Par ailleurs, la riveteuse comporte un moyen de détection d'un passage d'un mandrin dans le bac et le contrôleur arrête la riveteuse lorsque le passage d'un mandrin n'est pas détecté au bout d'un certain temps après détection de la cassure de ce dernier. Mais ce système automatisé est complexe et il concerne uniquement les rivets équipés d'un mandrin. Plus particulièrement, il n'est pas adapté aux écrous à sertir pour lesquels on utilise une tige de traction filetée pour déformer l'écrou, l'écrou ne comportant pas de mandrin.

On peut citer la demande de brevet européen EP0738550 qui divulgue un système de pose d'un rivet aveugle et d'évaluation de l'acceptabilité de la pose, comprenant un mécanisme destiné à saisir la tige d'un mandrin du rivet pour le tracter, un premier transducteur pour mesurer la force s'exerçant sur le rivet pendant la pose, un deuxième transducteur pour mesurer le déplacement du mécanisme de traction, et un circuit de commande pour déterminer, à partir du déplacement et de la force mesurés, l'énergie totale utilisée pendant la pose du rivet et pour la comparer à une valeur prédéterminée souhaitée. Mais le système est également complexe et n'est pas adapté au sertissage des écrous ne comportant pas de mandrin.

### Objet de l'invention

Un objet de l'invention consiste à pallier les inconvénients cités ci-avant, et en particulier à fournir des moyens simples pour contrôler le sertissage d'un composant de fixation sur un support afin de s'assurer des bonnes conditions de mise en place du composant.

Selon un aspect de l'invention, il est proposé un système de sertissage d'un composant de fixation sur un support, comprenant :
- un outil de sertissage comportant un logement et une tige de traction configurée pour coopérer avec le composant de fixation de manière à le déformer lors d'une translation de la tige de traction dans le logement et selon un axe longitudinal de l'outil de sertissage,
- une source d'un fluide raccordée au logement pour fournir le fluide sous pression dans le logement pour déplacer la tige de traction, et
- un moyen de mesure pour mesurer les déplacements de la tige de traction.

Le système de sertissage comporte un moyen de détection pour fournir une information d'une mise en pression du fluide dans le logement, et une unité de commande configurée pour recevoir les mesures de déplacement et l'information de mise en pression et pour enregistrer une courbe des déplacements mesurés et l'information de mise en pression du fluide dans le logement lors de la translation de la tige de traction.

Le système proposé est particulièrement simple car il permet de fournir un minimum d'informations utiles pour contrôler la qualité du montage du composant de fixation sur le support. En outre, un tel système est adapté, à la fois au sertissage de rivets équipés d'un mandrin, et à la fois au sertissage d'écrous tractés par une tige de traction filetée.

L'unité de commande peut être configurée pour arrêter la source du fluide lorsqu'une mesure du déplacement de la tige de traction est strictement positive et que l'information de mise en pression est nulle.

L'unité de commande peut être configurée pour arrêter la source du fluide lorsqu'une mesure du déplacement de la tige de traction est nulle et que l'information de mise en pression est strictement positive.

L'unité de commande peut également être configurée pour arrêter la source du fluide lorsqu'une mesure du déplacement de la tige de traction est supérieure à un seuil maximum.

L'unité de commande peut en outre être configurée pour arrêter la source du fluide lorsqu'une valeur maximum des mesures du déplacement de la tige de traction est inférieure à un seuil de déplacement minimum ou supérieure à un seuil de déplacement maximum.

La source du fluide peut être une source hydraulique ou pneumatique.

Selon un autre aspect, il est proposé un procédé de sertissage d'un composant de fixation sur un support, comprenant un outil de sertissage comportant un logement et une tige de traction configurée pour coopérer avec le composant de fixation de manière à le déformer lors d'une translation de la tige de traction dans le logement et selon un axe longitudinal de l'outil de sertissage, le procédé comprenant les étapes suivantes :
- fournir un fluide sous pression dans le logement pour déplacer la tige de traction, et
- mesurer les déplacements de la tige de traction.

Le procédé comporte en outre les étapes suivantes :
- détecter une mise en pression du fluide dans le logement, et
- enregistrer une courbe des déplacements mesurés et l'information de mise en pression du fluide dans le logement lors de la translation de la tige de traction.

Le procédé peut comprendre une source pour fournir le fluide et une étape d'arrêt de la source du fluide lorsqu'une mesure du déplacement de la tige de traction est strictement positive et que l'information de mise en pression est nulle.

Le procédé peut comprendre une étape d'arrêt de la source du fluide lorsqu'une mesure du déplacement de la tige de traction est nulle et que l'information de mise en pression est strictement positive.

Le procédé peut en outre comprendre une étape d'arrêt de la source du fluide lorsqu'une mesure du déplacement de la tige de traction est supérieure à un seuil maximum.

Le procédé peut également comprendre une étape d'arrêt de la source du fluide lorsqu'une valeur maximum des mesures du déplacement de la tige de traction est inférieure à un seuil de déplacement minimum ou supérieure à un seuil de déplacement maximum.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue en coupe d'un mode de réalisation d'un système de sertissage d'un composant de fixation ; et
- la figure 2, illustre schématiquement une courbe des déplacements de la tige de traction de l'outil de sertissage en fonction du temps.

### Description détaillée

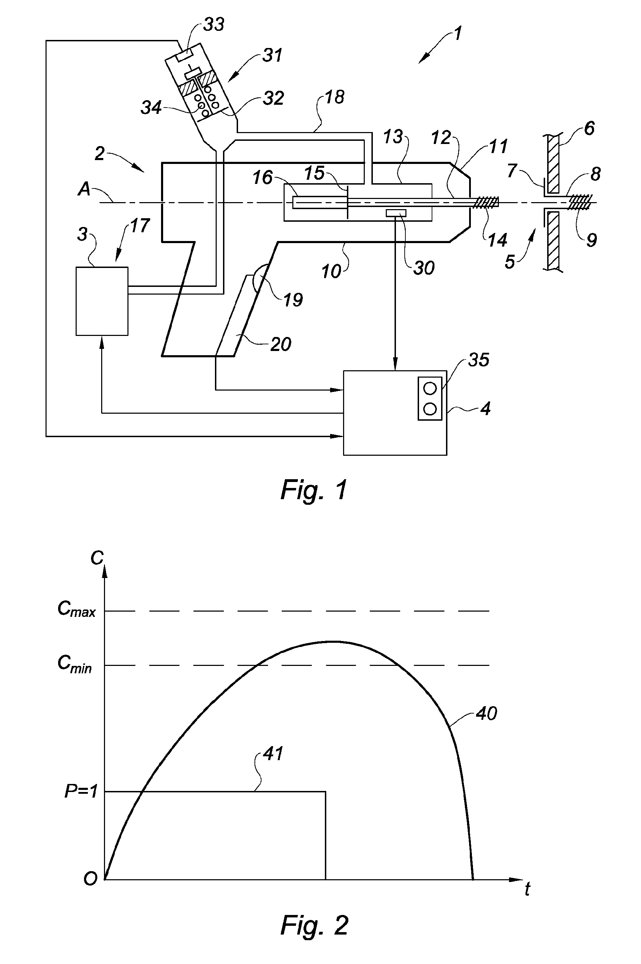

Sur la figure 1, on a représenté un système de sertissage 1 comprenant un outil de sertissage 2, une source d'un fluide 3, et une unité de commande 4. Le système de sertissage 1 permet de sertir un composant de fixation 5 sur un support 6. Le composant de fixation 5 peut être un rivet muni d'un mandrin, ou un écrou. De préférence, le composant de fixation 5 est un écrou comprenant une tête d'appui 7 et un corps déformable 8, le corps déformable 8 comprenant un filetage interne 9. L'outil de sertissage 2 comporte un corps 10 s'étendant longitudinalement selon un axe longitudinal A, et un nez de pose 11 situé à une extrémité du corps 10. L'outil de sertissage 2 comporte en outre une tige de traction 12 disposée dans un logement 13 du corps 10 de l'outil 2. La tige de traction 12 est configurée pour être couplée mécaniquement avec le composant de fixation 5. Selon un mode de réalisation préféré, la tige de traction 12 comporte un tronçon pourvu d'un filetage externe 14 destiné à coopérer avec le filetage interne 9 du composant de fixation 5 du type écrou. Selon un autre mode de réalisation, la tige de traction 12 comporte des mâchoires destinées à coopérer avec le mandrin du composant de fixation 5 du type rivet.

Dans le mode de réalisation préféré, le tronçon fileté 14 de la tige 12 est vissé dans le filetage interne 9 de l'écrou 5, de cette manière les mouvements et les efforts réalisés par la tige de traction 12 sont transférés au composant de fixation 5. La tige de traction 12 comporte également une extrémité arrière 15, opposée à l'extrémité comprenant le tronçon fileté 14, couplée mécaniquement à un arbre d'entraînement 16. L'arbre d'entraînement 16 et la tige de traction 12 sont disposés dans le logement 13. L'arbre d'entraînement 16 est animé en rotation et en translation, par rapport à l'axe longitudinal A, par un mécanisme d'entraînement 17. Le mécanisme d'entraînement 17 comporte la source du fluide 3, le logement 13 et un conduit 18 reliant le logement 13 à la source du fluide 3 de façon à amener le fluide sous pression dans le logement 13. La source de fluide 3 peut être une source hydraulique pour fournir un liquide, par exemple de l'huile, sous pression dans le logement 13. En variante, la source de fluide 3 peut être une source pneumatique pour fournir un gaz comprimé, par exemple de l'air, dans le logement 13. Lorsque l'arbre d'entraînement 16 est animé en rotation, il entraîne la rotation de la tige de traction 12 autour de l'axe longitudinal A, notamment pour visser la tige 12 dans l'écrou 5. Lorsque l'arbre d'entraînement 16 est animé en translation, il entraîne la translation de la tige de traction 12 le long de l'axe longitudinal A, soit vers l'arrière, c'est-à-dire dans la direction opposée au nez de pose 11, soit vers l'avant pour ramener la tige de traction 12 dans sa position initiale. La translation vers l'arrière de la tige de traction 12 permet de tirer le composant de fixation 5 de façon à le déformer pour former un bourrelet de sertissage, ce qui permet de réaliser l'opération de sertissage. Pour entraîner la déformation du composant de fixation 5, le nez de pose 11 est en contact avec la tête d'appui 7 du composant de fixation 5, et lors de la traction de la tige 12 vers l'arrière, le filetage interne 9 du corps déformable 8 se rapproche de la tête d'appui 7 du composant 5 et le corps déformable 8 se déforme pour former le bourrelet de sertissage. La déformation de l'écrou 5 entraîne la formation du bourrelet de sertissage contre le support 6 pour coincer ce dernier avec la tête d'appui 7. La tige de traction 12 est ensuite dévissée et le composant 5 reste fixé au support 6.

La source de fluide 3 est commandée par l'unité de commande 4 configurée pour activer ou arrêter la source de fluide 3 en réponse à une pression de l'opérateur sur une gâchette 19 de l'outil de sertissage 2. En outre, l'outil de sertissage 2 peut comporter une poignée 20 pour porter l'outil 2, lorsque l'outil est portatif. En variante, le corps 10 de l'outil est monté sur un bras d'un robot.

L'outil de sertissage 2 comporte, en outre, un moyen de mesure 30 pour mesurer les déplacements C de la tige de traction 12, et un moyen de détection 31 pour fournir une information d'une mise en pression du fluide dans le logement 13. On considère que le déplacement C de la tige de traction est nul lorsque la tige de traction 12 est dans une position initiale. Lorsque la tige 12 est dans une position en arrière de la position initiale (que la tige 12 soit animée en translation vers l'avant en direction du nez de pose 11 ou vers l'arrière dans la direction opposée), on considère que le déplacement est strictement positif et la valeur du déplacement correspond à la position de l'extrémité arrière 15 par rapport à sa position initiale. On entend par valeur du déplacement, la valeur mesurée du déplacement de la tige de traction 12. Le moyen de mesure 30 du déplacement peut être un capteur de position, par exemple un capteur inductif ou capacitif. Le moyen de mesure 30 mesure en temps réel la position de la tige de traction 12 au cours de l'opération de sertissage, c'est-à-dire que l'information de position de la tige 12 est fournie en continu à l'unité de commande 4.

Le moyen de détection 31 peut être un pressostat qui est activé lorsque le fluide est en pression dans le logement 13. Un pressostat est adapté pour détecter le dépassement, d'une valeur prédéterminée, de la pression d'un fluide. Le moyen de détection 31 permet de fournir une information de mise en pression P du fluide dans le logement 13 à l'unité de commande 4. Cette information est binaire, ce qui simplifie le système de sertissage 1. En effet, à la différence d'un capteur, tel le moyen de mesure de déplacement 30, le moyen de détection 31 indique uniquement si la pression du fluide a dépassé un seuil de pression déterminé. En particulier le seuil de pression déterminé est supérieur à la pression nécessaire à la traction de la tige 12 sans présence du composant de fixation 5 à sertir, c'est-à-dire lorsque la tige de traction 12 n'est vissée à aucun écrou, ou lorsque les mâchoires de la tige de traction 12 ne saisissent aucun mandrin. De préférence, le seuil de pression déterminé est également inférieur à la pression nécessaire au sertissage du composant de fixation 5 qui nécessite un minimum d'effort. L'information de mise en pression P du fluide permet d'indiquer à l'unité de commande 4 qu'un cycle de sertissage est en cours, en d'autres termes que le mécanisme d'entraînement 17 est en pression. Par exemple, le moyen de détection 31 comporte un piston 32 actionné par le fluide présent dans le conduit 18, et un contacteur électrique 33. Le contacteur électrique 33 permet de détecter une pression dans le logement 13 supérieure au seuil de pression déterminé. En outre, un ressort de rappel 34 permet de maintenir le piston 32 dans une position initiale, où le contacteur électrique est ouvert et l'information de mise en pression P du fluide dans le logement 13 est nulle. Lorsque la pression du fluide augmente le piston 32 se déplace et comprime le ressort de rappel 34. Puis, lorsque la pression du fluide dépasse le seuil de pression déterminé, qui est proportionnel à la raideur du ressort 34, le piston 32 ferme le contacteur électrique 33. Le ressort de rappel 34 permet, en outre, un retour en position du piston 32 lorsque la pression du fluide diminue et devient inférieure au seuil de pression déterminé.

L'unité de commande 4 est configurée pour recevoir les mesures de déplacement C de la tige de traction 12 et l'information de mise en pression P du fluide fournies par le moyen de mesure 30 et le moyen de détection 31. Le déplacement de la tige de traction 12 caractérise la déformation du composant de fixation 5. Par ailleurs, l'unité de commande 4 est configurée pour contrôler la validité des valeurs du déplacement C de la tige de traction 12 et de la courbe des déplacements de la tige de traction 12. En d'autres termes, l'unité de commande 4 vérifie si l'opération de sertissage est conforme ou non. La courbe des déplacements est construite à partir des valeurs des déplacements au cours de l'opération de sertissage. L'unité de commande 4 enregistre également les valeurs de l'information de mise en pression P du fluide.

L'unité de commande 4 peut comporter des moyens de signalisation 35 pour indiquer si l'opération de sertissage est conforme ou non, par exemple par rapport à une courbe de référence. En outre, l'unité de commande 4 enregistre la courbe des valeurs du déplacement de la tige de traction 12 et la valeur de l'information de mise en pression P du fluide, au cours du temps pendant une opération de sertissage.

On considère qu'une opération de sertissage est conforme si toutes les conditions suivantes sont valides :
- il n'y a pas de déplacement de la tige de traction (C=0) avant une mise en pression du fluide dans le logement (P=0) ;
- il y a un déplacement de la tige de traction (C>0) après l'obtention de l'information de mise en pression du fluide dans le logement (P=1) ;
- les mesures du déplacement de la tige de traction (12) sont inférieures à un seuil de déplacement maximum Cmax ;
- une valeur maximum MAX_C des déplacements C mesurés de la tige de traction 12 est comprise entre un seuil de déplacement minimum Cmin et un seuil de déplacement maximum Cmax ;
- la courbe des déplacements de la tige de traction 12 est conforme après une comparaison avec une courbe de référence.

La référence C correspond au déplacement de la tige de traction 12 ; la référence P correspond à l'information de mise en pression du fluide. Par ailleurs, le déplacement C de la tige 12 est nul lorsque la tige de traction 12 est dans sa position initiale (c'est-à-dire lorsque l'extrémité arrière 15 de la tige de traction 12 est dans une position initiale), le déplacement C est strictement positif lorsque l'extrémité arrière 15 de la tige de traction 12 est dans une position en arrière de la position initiale de l'extrémité arrière 15, c'est-à-dire dans la direction opposée au nez de pose 11, et le déplacement C est strictement négatif lorsque l'extrémité arrière 15 de la tige de traction 12 est dans une position en avant de la position initiale de l'extrémité arrière 15, c'est-à-dire lorsque l'extrémité arrière 15 de la tige de traction 12 est située entre la position initiale de l'extrémité arrière 15 et le nez de pose 11. L'information de mise en pression P du fluide est, quant à elle, nulle lorsque la pression du fluide est inférieure ou égale au seuil de pression déterminé, et elle est égale à « un » lorsque la pression du fluide est strictement supérieure au seuil de pression déterminé.

L'unité de commande 4 enregistre la courbe des déplacements de la tige de traction 12. Elle peut en outre déterminer la valeur maximum MAX_C des mesures du déplacement de la tige de traction 12 au cours de l'opération de sertissage. Par exemple, l'unité de commande 4 peut comparer les valeurs des déplacements mesurés avec le seuil de déplacement maximum Cmax et le seuil de déplacement minimum Cmin. Les valeurs des seuils Cmax, Cmin sont établies en fonction du type du composant de fixation 5. Par ailleurs, l'unité de commande 4 peut comparer la courbe enregistrée avec une courbe de référence lorsque l'opération de sertissage est terminée. Lors de la comparaison de la courbe enregistrée avec une courbe de référence, on considère que la courbe des déplacements est conforme lorsque la dispersion des mesures, par rapport aux valeurs de la courbe de référence, est conforme, c'est-à-dire que les mesures sont comprises dans un intervalle déterminé. L'unité de commande 4 peut émettre un signal de sertissage conforme, à l'aide des moyens de signalisation 35, lorsque toutes les conditions de conformité de l'opération de sertissage citées ci-avant sont valides.

Sur la figure 2, on a représenté une courbe 40 des déplacements C de la tige de traction 12 conforme. On a également représenté sur la figure 2, la courbe 41 de l'information de mise en pression P du fluide au cours d'une opération de sertissage conforme. On peut noter que lors d'une opération de sertissage conforme, la tige de traction 12 est translatée vers l'arrière, et le déplacement C est strictement positif et augmente, puis après la formation du bourrelet de sertissage, la tige de traction 12 est dévissé et la tige reprend sa position initiale, le déplacement C reste positif puis décroît jusqu'à la valeur nulle. Lors d'une opération de sertissage conforme, la mise en pression P du fluide dans le logement 13 est détectée au moment où l'on mesure un déplacement positif. Puis, le déplacement évolue et la courbe est enregistrée en fin d'opération. La fin d'une opération de sertissage est déterminée lorsque l'information de mise en pression P du fluide passe de la valeur « un » à nulle. Lorsque la fin d'opération de sertissage est détectée, l'unité de commande 4 enregistre les courbes 40, 41. Pendant l'opération de sertissage, l'unité de commande 4 compare les valeurs de la courbe des déplacements 40 avec les seuils de déplacement maximum Cmax et minimum Cmin. Plus particulièrement l'unité de commande 4 compare la valeur maximum MAX_C de la courbe des déplacements 40 avec les seuils de déplacement Cmax, Cmin, et indique si le cycle est conforme, notamment par l'intermédiaire des moyens de signalisation 35.

Au contraire, on considère qu'une opération de sertissage n'est pas conforme si au moins une des conditions suivantes est valide :
- il y a un déplacement de la tige de traction (C>0) avant une mise en pression du fluide dans le logement (P=0) ;
- il n'y a pas un déplacement de la tige de traction (C=0) après l'obtention de l'information de mise en pression du fluide dans le logement (P=1) ;
- une mesure du déplacement de la tige de traction (12) est supérieure au seuil de déplacement maximum Cmax ;
- la valeur maximum MAX_C des déplacements C mesurés de la tige de traction 12 est inférieure au seuil de déplacement minimum Cmin ou supérieure au seuil de déplacement maximum Cmax ;
- la courbe des déplacements de la tige de traction 12 n'est pas conforme après une comparaison avec une courbe de référence.

Lorsqu'au moins une condition indiquant une opération de sertissage non conforme est valide, l'unité de commande 4 arrête la source du fluide 3, pour notamment arrêter l'outil de sertissage 2 afin d'éviter tout risque d'endommagement. Dans le cas où il y a un déplacement de la tige de traction (C>0) avant une mise en pression du fluide dans le logement (P=0), on détecte que le sertissage est incomplet, ou qu'il y a eu une opération de sertissage sans composant de fixation couplé mécaniquement à la tige 12, ou encore que la tige de traction 12 a cassé au démarrage de l'opération de sertissage. Dans le cas où il n'y a pas un déplacement de la tige de traction (C=0) après l'obtention de l'information mise en pression du fluide dans le logement (P=1), il y a un défaut de fonctionnement du mécanisme d'entraînement 17.

On considère également que l'opération de sertissage n'est pas conforme lorsque la mesure d'un déplacement de la tige de traction 12 est supérieure au seuil de déplacement maximum Cmax, dans ce cas le sertissage est excessif. En outre, l'opération de sertissage n'est pas conforme lorsque la valeur maximum MAX_C des mesures du déplacement de la tige de traction 12 est inférieure au seuil de déplacement minimum Cmin, dans ce cas le sertissage est insuffisant. On considère également que la courbe des déplacements n'est pas conforme lorsque les mesures des déplacements C sont en dehors de l'intervalle déterminé, c'est-à-dire que la dispersion des mesures n'est pas conforme.

Le procédé de sertissage peut être mis en oeuvre par le système de sertissage 1 décrit ci-avant. Le procédé comprend les étapes suivantes :
- fournir un fluide sous pression, par l'intermédiaire de la source de fluide 3, dans le logement pour déplacer la tige de traction 12,
- mesurer, par l'intermédiaire du moyen de mesure 30, les déplacements de la tige de traction 12,
- détecter, par l'intermédiaire du moyen de détection 31, une mise en pression du fluide dans le logement, et
- enregistrer, par l'intermédiaire de l'unité de commande 4, une courbe des déplacements mesurés et l'information de mise en pression du fluide dans le logement lors de la translation de la tige de traction.

Le procédé peut en outre comprendre les étapes suivantes :
- arrêter la source du fluide lorsqu'une mesure du déplacement de la tige de traction est strictement positive et que l'information de mise en pression est nulle, et/ou
- arrêter la source du fluide lorsqu'une mesure du déplacement de la tige de traction est nulle et que l'information de mise en pression est strictement positive.

Le procédé peut également comprendre une étape de comparaison de la courbe enregistrée avec une courbe de référence et une étape d'arrêt de la source du fluide lorsque la courbe enregistrée n'est pas conforme. En variante, on peut arrêter la source du fluide lorsqu'une valeur maximum MAX_C des mesures du déplacement de la tige de traction est inférieure à un seuil minimum ou supérieure à un seuil maximum.

Le système de sertissage et le procédé de commande d'un outil de sertissage sont particulièrement simples et adaptés à tout type de composants de fixation, en particulier aux écrous et rivets.

## Revendications

1. Système de sertissage (1) d'un composant de fixation (5) sur un support (6), comprenant :
- un outil de sertissage (2) comportant un logement (13) et une tige de traction (12) configurée pour coopérer avec le composant de fixation (5) de manière à le déformer lors d'une translation de la tige de traction (12) dans le logement (13) et selon un axe longitudinal (A) de l'outil de sertissage (2),
- une source d'un fluide (3) raccordée au logement (13) pour fournir le fluide sous pression dans le logement (13) pour déplacer la tige de traction (12), et
- un moyen de mesure (30) pour mesurer les déplacements de la tige de traction (12),
**caractérisé en ce qu'**il comporte un moyen de détection (31) pour fournir une information d'une mise en pression du fluide dans le logement (13), et une unité de commande (4) configurée pour recevoir les mesures de déplacement et l'information de mise en pression et pour enregistrer une courbe des déplacements mesurés et l'information de mise en pression du fluide dans le logement (13) lors de la translation de la tige de traction (12).

2. Système selon la revendication 1, dans lequel l'unité de commande (4) est configurée pour arrêter la source du fluide (3) lorsqu'une mesure du déplacement de la tige de traction (12) est strictement positive et que l'information de mise en pression est nulle.

3. Système selon la revendication 1 ou 2, dans lequel l'unité de commande (4) est configurée pour arrêter la source du fluide (3) lorsqu'une mesure du déplacement de la tige de traction (12) est nulle et que l'information de mise en pression est strictement positive.

4. Système selon l'une des revendications 1 à 3, dans lequel l'unité de commande (4) est configurée pour arrêter la source du fluide (3) lorsqu'une mesure du déplacement de la tige de traction (12) est supérieure à un seuil maximum.

5. Système selon l'une des revendications 1 à 4, dans lequel l'unité de commande (4) est configurée pour arrêter la source du fluide (3) lorsqu'une valeur maximum des mesures du déplacement de la tige de traction (12) est inférieure à un seuil de déplacement minimum (Cmin) ou supérieure à un seuil de déplacement maximum (Cmax).

6. Système selon l'une des revendications 1 à 5, dans lequel la source du fluide (3) est une source hydraulique.

7. Système selon l'une des revendications 1 à 5, dans lequel la source du fluide (3) est une source pneumatique.

8. Procédé de sertissage d'un composant de fixation (5) sur un support (6), comprenant un outil de sertissage (2) comportant un logement (13) et une tige de traction (12) configurée pour coopérer avec le composant de fixation (5) de manière à le déformer lors d'une translation de la tige de traction (12) dans le logement (13) et selon un axe longitudinal (A) de l'outil de sertissage (2), le procédé comprenant les étapes suivantes :
- fournir un fluide sous pression dans le logement (13) pour déplacer la tige de traction (12), et
- mesurer les déplacements de la tige de traction (12),
**caractérisé en ce qu'**il comporte les étapes suivantes :
- détecter une mise en pression du fluide dans le logement (13), et
- enregistrer une courbe des déplacements mesurés et l'information de mise en pression du fluide dans le logement (13) lors de la translation de la tige de traction (12).

9. Procédé selon la revendication 8, comprenant une source (3) pour fournir le fluide et une étape d'arrêt de la source du fluide (3) lorsqu'une mesure du déplacement de la tige de traction (12) est strictement positive et que l'information de mise en pression est nulle.

10. Procédé selon la revendication 9, comprenant une étape d'arrêt de la source du fluide (3) lorsqu'une mesure du déplacement de la tige de traction (12) est nulle et que l'information de mise en pression est strictement positive.

11. Procédé selon la revendication 9 ou 10, comprenant une étape d'arrêt de la source du fluide (3) lorsqu'une mesure du déplacement de la tige de traction (12) est supérieure à un seuil maximum.

12. Procédé selon l'une des revendications 9 à 11, comprenant une étape d'arrêt de la source du fluide (3) lorsqu'une valeur maximum des mesures du déplacement de la tige de traction (12) est inférieure à un seuil de déplacement minimum (Cmin) ou supérieure à un seuil de déplacement maximum (Cmax).
